# EUROPÄISCHE PATENTSCHRIFT

(11) **EP 4 057 248 B1**
(45) Veröffentlichungstag und Bekanntmachung des Hinweises auf die Patenterteilung: **04.12.2024**
(21) Anmeldenummer: 21162353.3
(22) Anmeldetag: 12.03.2021
(51) Int. Cl.: G08B 21/02, G08B 7/00, G08B 7/06, G06Q 10/10, G06Q 90/00, G08B 21/22, G06Q 10/063

(54) **VERFAHREN ZUM BETRIEB EINES EVAKUIERUNGSSYSTEMS ZUR UNTERSTÜTZUNG EINES EVAKUIERUNGSFALLS UND EIN EVAKUIERUNGSSYSTEM**
EVACUATION SYSTEM AND METHOD FOR OPERATING AN EVACUATION SYSTEM FOR SUPPORTING AN EVACUATION FAILURE
PROCÉDÉ DE FONCTIONNEMENT D'UN SYSTÈME D'ÉVACUATION DESTINÉ À L'AIDE EN CAS D'ÉVACUATION ET SYSTÈME D'ÉVACUATION

(43) Veröffentlichungstag der Anmeldung: 14.09.2022
(73) Patentinhaber: Proseco Software GmbH, 77975 Ringsheim (DE)
(72) Erfinder: BIHL, Wolfgang, 77975 Ringsheim (DE)
(74) Vertreter: Kleine, Hubertus

(56) Entgegenhaltungen:
- CN-A- 106 463 006
- US-A1- 2019 139 339
- US-B1- 9 408 041
- US-B2- 10 306 411
- US-B2- 10 489 737

## Beschreibung

Die vorliegende Erfindung betrifft ein Verfahren zum Betrieb eines Evakuierungssystems zur Unterstützung eines Evakuierungsfalls, insbesondere bei der Evakuierung eines Gebäudes, und ein Evakuierungssystem.

Das Verfahren kann vorteilhaft mit einem Verfahren zur automatischen Arbeitszeiterfassung und/oder Positionsbestimmung einer Person in einem vorgegebenen Umfeld, insbesondere in einem Umfeld, welches durch ein Bluetooth-Netz abgedeckt ist, sowie ein hierfür verwendetes Erfassungssystem basierend auf der Bluetooth-Technologie verbunden werden.

Bekannte Systeme zur Evakuierung umfassen typischerweise einen Alarm, sowie ein Leitsystem. Im Evakuierungsfall sammeln sich die im Gebäude befindlichen Personen auf einem Sammelplatz außerhalb des Gebäudes. Die Ermittlung der Anzahl der Personen und wer genau fehlt nimmt dabei einen gewissen Zeitaufwand in Anspruch. Noch komplizierter gestaltet sich die Sachlage, sofern ein Gebäude mehrere Sammelplätze aufweist. Dabei müssen Personen auf beiden Sammelplätzen ermittelt und identifiziert werden.

Sind die fehlenden Personen identifiziert, kann man zwar durch die Person auf ihren Arbeitsplatz schließen. Befindet sich die Person allerdings an einem anderen Ort, z.B. auf der Toilette oder in der Betriebsküche, gestaltet sich die Suche nach der Person als schwierig.

Diesbezüglich relevante Technologien werden durch die US 2019139339, die CN106463006, die US10489737 und die US9408041 offenbart.

Es ist daher Aufgabe der vorliegenden Erfindung ein Verfahren und ein Evakuierungssystem bereitzustellen, welches einen Evakuierungsvorgang unterstützt und vereinfacht.

Diese Aufgabe wird von einem Verfahren mit den Merkmalen des Anspruches 1 gelöst.

Ein erfindungsgemäßes Verfahren zum Betrieb eines Evakuierungssystems zur Unterstützung eines Evakuierungsfalls, insbesondere einer Evakuierung eines Gebäudes, weist die folgenden Schritte auf:
a. Bereitstellen eines Bluetooth-basierten Evakuierungssystems umfassend zumindest eine Anmeldeeinheit welche an einer Arbeitsstelle positioniert wird und zumindest einen Bluetooth-Anhänger, welcher von der zu erfassenden Person mitgeführt wird,
   wobei der Bluetooth-Anhänger einen Datensatz mit einer individuellen Kennung zur Identifizierung der Person aufweist;

Selbstverständlich können neben der der Arbeitsstelle zugeordneten Person auch alle weiteren Personen, welche die Anmeldeeinheit passieren, erfasst werden, wenn sie einen Bluetooth-Anhänger mit sich führen. Dies betrifft Kollegen, Mitarbeiter oder auch Besucher. Im Evakuierungsfall wird die Arbeitsstelle als Gefahrenbereich definiert bzw. erkannt.

Der Bluetooth-Anhänger ist transportabel. Er kann ohne weiteres in einer Hosentasche oder einem Schlüsselbund mitgeführt werden. Der Bluetooth-Anhänger ist ein batteriebetriebenes Elektronikteil und nicht Teil einer übergeordneten Maschineneinheit, wie z.B. einem Drucker, einem Smartphone oder dergleichen.
b. Initiierung eines Alarms aufgrund eines Evakuierungsfalls innerhalb eines Gefahrenbereichs;

Die Initiierung des Alarms kann manuell, durch Eingabe auf einem Bedienfeld der Anmeldeeinheit erfolgen oder er kann sensorisch, z.B. durch einen Feuermelder oder einen andersartigen Sensor ausgelöst werden.

Ein Evakuierungsfall kann z.B. in einem Brandfall auftreten. Es kann auch andere Ursachen geben, wie z.B. Naturkatastrophen wie Erdbeben oder menschengemachte Evakuierungsfälle wie z.B. Überfälle, Bankraub und dergleichen.
c. Bereitstellen der Anmeldeeinheit (3) an einem Ort außerhalb des Gefahrenbereichs;

In diesem Schritt erfolgt das Bereitstellen einer Anmeldeeinheit an einem Ort außerhalb des Gefahrenbereichs. Diese Anmeldeeinheit ist vorzugsweise ein transportables Gerät, z.B. ein Tablet-Computer. Der Ort außerhalb des Gefahrenbereichs ist z.B. ein Sammelbereich, welcher bei vielen Gebäuden festgeschrieben ist. An dieser Stelle kann die Anmeldeeinheit anwesende Bluetooth-Anhänger erfassen und dadurch die Anzahl der Personen ermitteln, welche sich noch im Gefahrenbereich befinden. Diese Ermittlung erfolgt in den nachfolgenden Schritten d-f:
d. Scannen der Anmeldeeinheit nach zumindest einem, insbesondere einer Vielzahl, von auf die Anmeldeeinheit abgestimmten Bluetooth-Anhänger;
e. Senden eines Signals, insbesondere umfassend den Datensatz, durch den jeweiligen Bluetooth-Anhänger;
f. Empfang des Signals durch die Anmeldeeinheit bei gleichzeitiger Ermittlung des Zeitpunkts des Empfangs durch ein Zeiterfassungssystem der Anmeldeeinheit und/oder der Position der Person unter Einbeziehung von geographischen Daten hinsichtlich des Orts der Anmeldeeinheit,

Eine bevorzugte Ausführungsvariante umfasst eine Signalübertragung zwischen Bluetooth-Anhänger und Anmeldeeinheit ohne dass ein vorheriges Pairing erfolgt. Dadurch wird die Limitierung der Anzahl der gekoppelten Bluetooth-Sendegeräte einerseits aufgehoben.

Sodann erfolgt in Schritt g) ein Vergleich der in Schritt d) ermittelten Daten mit einem Datenprotokoll. Dieses Datenprotokoll umfasst einen oder mehrere vor dem Evakuierungsfall erstellten Datensätze umfassend einen letzten erfassten Zeitpunkt und einen letzten erfassten Ort der Person vor dem Initiieren des Evakuierungsfalls gemäß Schritt b. Dabei kann es sich um Daten eines Arbeitszeiterfassungssystems handeln, wodurch das vorliegende Verfahren besondere Synergieeffekte erlaubt. Das Datenprotokoll kann auch Datensätze enthalten von Personen, z.B. Rettungskräfte, welche erst während des Evakuierungsfalls das Gebäude betreten haben, sofern sie einen Bluetooth-Anhänger haben.

Das Verfahren schließt sodann mit Schritt f) einer Aktualisierung des Datenprotokolls ab. Das Datenprotokoll ist über ein Netzwerk auf weitere Anmeldeeinheiten übertragbar, was besonders günstig ist, wenn ein Gebäude mehrere Sammelbereiche aufweist. Eine weitergehende Abstimmung zwischen den Sammelbereichen bedarf es in diesem Fall nicht.

Weitere Vorteile des vorliegenden Verfahrens sind Gegenstand der Unteransprüche.

In einer bevorzugten Ausführungsvariante kann das Scannen der Anmeldeeinheit kontinuierlich erfolgen, wobei kontinuierlich auch zyklisch bedeuten kann. Analog kann der Bluetooth-Anhänger eine Kennung, vorzugsweise umfassend eine Mac-Adresse, ausstrahlen die er permanent und vorzugsweise zyklisch, besonders bevorzugt alle 0,5-5 Sekunden, über ein Bluetooth-Sendemodul bzw. eine Bluetooth-Sendeeinheit ausstrahlt. Die Anmeldeeinheit kann sodann die ermittelten Namen der Personen, die sich im Gefahrenbereich befinden, anzeigen.

Dabei kann ein sogenanntes Pairing entfallen, welches u.a. eine Empfangseinheit für den Bluetooth-Anhänger voraussetzt.

Weiterhin kann das Evakuierungssystem in einer bevorzugten ersten Ausführungsvariante mehrere Anmeldeeinheiten umfassen, welche als Netzwerk zum gegenseitigen Datenaustausch miteinander verbunden sind, derart dass nach dem Empfang des Signals die geographische Position der empfangenden ersten Anmeldeeinheit an einem ersten Ort außerhalb des Gefahrenbereichs an das Netzwerk übermittelt und von einem zweiten Anmeldeeinheit an einem zweiten Ort außerhalb des Gefahrenbereichs abgerufen wird. Gerade bei mehreren Sammelbereichen erleichtert sich dadurch die Kommunikation mit den Rettungskräften.

In einer weiteren zweiten Ausführungsvariante der Erfindung umfasst das Evakuierungssystem mehrere Anmeldeeinheiten, wobei zusätzlich zur bereitgestellten Anmeldeeinheit in Schritt c weitere Anmeldeeinheiten im Gefahrenbereich verbleiben und wobei die Anmeldeeinheiten im Gefahrenbereich in einen Betriebsmodus zur Anzeige des nahest-gelegenen Ausgangs aus dem Gefahrenbereich versetzt werden. In diesem Betriebsmodus fungieren die Anmeldeeinheiten im Gefahrenbereich als Leitsystem.

Erfindungsgemäß umfasst das Evakuierungssystem mehrere Anmeldeeinheiten, wobei zusätzlich zur bereitgestellten Anmeldeeinheit in Schritt c weitere Anmeldeeinheiten im Gefahrenbereich verbleiben und wobei diese Anmeldeeinheiten im Gefahrenbereich die Schritte d-f unter Erstellung eines Datensatzes durchführen und diesen an das Netzwerk zur Positionsbestimmung der Person im Gefahrenbereich übermitteln.

Die erste, zweite und dritte Ausführungsvariante des Verfahrens können vorteilhaft miteinander kombiniert werden. In diesem Fall handelt es sich um die jeweiligen Anmeldeeinheiten in der Gefahrenzone der jeweiligen Ausführungsvariante um dieselben. Gleiches gilt für die Anmeldeeinheit oder Anmeldeeinheiten am Ort außerhalb der Gefahrenzone.

Bevorzugt kann der Bluetooth-Anhänger vorzugsweise als ein BLE-Anhänger ausgebildet sein.

Der Bluetooth-Anhänger kann vorzugsweise einen bevorzugten Raumbedarf von weniger als 7 cm³, besonders bevorzugt weniger als 3 cm³, aufweisen.

Die Anmeldeeinheit am Ort außerhalb des Gefahrenbereichs ist erfindungsgemäß als mobiles Endgerät, vorzugsweise als Mobiltelefon, Tablet und/oder Laptop ausgebildet, wobei das Scannen vorzugsweise in einem Bluetooth Low Energy Modus bzw. BLE-Modus erfolgen kann. Diese Anmeldeeinheit kann vorzugsweise ebenfalls Teil des Evakuierungssystems bilden. Es muss allerdings keine zusätzliche Anmeldeeinheit genutzt werden, sondern z.B. bei kleinen Büroeinheiten, kann die einzige verfügbare Anmeldeeinheit an einen Ort außerhalb des Gefahrenbereichs transportiert werden und an diesem Ort die Zählung und Identifizierung der evakuierten Personen vornehmen.

Die Anmeldeeinheit ist vorteilhaft internetfähig und vorzugsweise eine W-LAN Sendeeinheit, besonders bevorzugt eine W-LAN Sende- und Empfangseinheit aufweist, zum Austausch mit weiteren Anmeldeeinheiten oder mit externen Rechnern auf. Dadurch kann ein Netzwerk unter den Anmeldeeinheiten, insbesondere zwischen den Anmeldeeinheiten in der Gefahrenzone und am Ort oder den Orten außerhalb der Gefahrenzone aufgebaut werden.

Der Bluetooth-Anhänger kann einen Datensatz mit einer individuellen Kennung zur Identifizierung der Person aufweisen, vorzugsweise als eine Mac-Adresse, einen Namen der Person und/oder einem Namenscode. Dadurch gelingt eine Identifizierung der fehlenden Person bei deren Abwesenheit und die Möglichkeit in einer Rettungsaktion die Person mit Namen anzusprechen.

Die Anmeldeeinheiten im Gefahrenbereich weisen erfindungsgemäß ein Schnellwahlfeld zur Verbindung mit der Anmeldeeinheit am Ort außerhalb des Gefahrenbereichs auf. Dies ist besonders von Vorteil, um einen Hilferuf abzusenden. Diese Funktionalität ist im Brandfall weniger wichtig, da hier die Anmeldeeinheit wahrscheinlich zerstört ist. In anderen Evakuierungsfällen, wie z.B. Erdbeben oder Überfall, ist diese Funktion durchaus nützlich.

Das Evakuierungssystem ist zugleich als System zur Arbeitszeiterfassung betreibbar, so dass das Evakuierungssystem auch ein Verfahren zur Arbeitszeiterfassung ausführen kann. Beide Systeme könne durch Bausatz aus einem oder mehreren Anmeldeeinheiten und einem oder insbesondere mehreren Bluetooth-Anhängern in unterschiedlichen Betriebsmodi realisiert werden.

Besonders bevorzugt in diesem Kontext, dass die üblichen Limitierungen eines Pairings zwischen Bluetooth-Anhänger und Anmeldeeinheit bei beiden Verfahren, also sowohl bei der Evakuierung als auch bei der Arbeitszeiterfassung entfallen kann.

Dadurch können auch 1000 Bluetooth-Anhänger oder noch weit mehr von einer einzigen Anmeldeeinheit erkannt und erfasst werden.

Nachfolgend wird ein entsprechendes Verfahren zur Arbeitszeiterfassung näher erläutert, welches in einem weiteren Betriebsmodus durch das Evakuierungssystem ausführbar ist. Dabei arbeitet das Evakuierungssystem als Arbeitszeiterfassungssystem.

Ein entsprechendes Verfahren zur Arbeitszeiterfassung kann vorzugsweise wie folgt erfolgen, wobei das nachfolgend beschriebene Erkennungssystem auch zugleich das Evakuierungssystem sein kann:
Zunächst kann ein Bereitstellen eines Bluetooth-basierten Erkennungssystems umfassend zumindest eine Anmeldeeinheit zur Positionierung an der Arbeitsstelle und zumindest einen Bluetooth-Anhänger, welcher von der zu erfassenden Person mitführbar ist, erfolgen. Besagte Anmeldeeinheit und Bluetooth-Anhänger werden nach Ihrer Lieferung an einen Kunden an die Arbeitsstelle der zu erfassenden Person positioniert und die Person wird mit dem Bluetooth-Anhänger versehen. Der Bluetooth-Anhänger kann einen Datensatz mit einer individuellen Kennung zur Identifizierung der Person aufweisen. Dabei kann es sich z.B. um eine Mac-Adresse handeln, welche dem Namen der Person oder einem Namenscode entspricht.

Ein Scannen der Anmeldeeinheit nach einem auf die Anmeldeeinheit abgestimmten Bluetooth-Anhänger kann insbesondere im kontinuierlichen Betrieb erfolgen. Die Abstimmung des Bluetooth Anhängers auf die Anmeldeeinheit kann vorzugsweise derart erfolgen, dass das Signal des Bluetooth-Anhängers zusätzlich zur Kennung einen Code übermittelt, welcher anzeigt, dass der Bluetooth-Anhänger Teil des jeweiligen Erkennungssystems ist. Nutzen z.B. auf einer Baustelle zwei Firmen ein zweites Erkennungssystem, so erkennt die Anmeldeeinheit anhand des Codes, ob das eingehende Bluetooth-Signal zur weiteren Datenverarbeitung bestimmt ist oder zu einem Bluetooth-Anhänger des zweiten Erkennungssystems gehört. In diesem Fall werden die eingehenden Daten nicht erfasst und/oder dauerhaft gespeichert.

Zeitgleich oder anschließend kann ein Senden eines Signals, insbesondere umfassend den Datensatz, durch den Bluetooth-Anhänger erfolgen. Wird das Signal übermittelt, so kann eine Weiterverarbeitung der Daten erfolgen, z.B. ein Arbeitszeitbeginn unter Einbeziehung der Uhrzeit oder ein Arbeitszeitende. Im Fall eines Netzwerks aus mehreren im Unternehmen verteilten Anmeldeeinheiten kann die Position der Person innerhalb des Unternehmens bzw. der Anmeldeeinheit, welche das stärkste Signal des Bluetooth-Anhängers erkennt, abgefragt werden.

Der Empfang des Signals durch die Anmeldeeinheit kann bei gleichzeitiger Ermittlung des Zeitpunkts des Empfangs durch ein Zeiterfassungssystem der Anmeldeeinheit erfolgen. Zusätzlich oder alternativ kann die Position der Person unter Einbeziehung von geographischen Daten hinsichtlich des Orts der Anmeldeeinheit ermittelt werden. Dadurch kann durch das Erkennungssystem die Arbeitszeit der identifizierten und erfassten Person erfasst bzw. protokolliert werden oder die Position der jeweiligen Person innerhalb des Unternehmens oder beides. Insbesondere kann als besagtes vorgegebenes Umfeld neben dem Gebiet, in welchem eine Arbeit erbracht wird, auch Busse, Messehallen usw. verstanden werden. Bevorzugt ist das gesamte vorgegebene Umfeld durch Positionierung einer oder mehrerer Anmeldeeinheiten, welche sich zu einem Netzwerk ergänzen, mit einem Bluetooth-Empfangsnetzwerk abgedeckt.

Es ist von Vorteil, wenn dem empfangenen Datensatz der Zeitpunkt des Empfangs unter Erstellung eines Datenpaar zugeordnet wird und dass vorzugsweise ein dauerhaftes Speichern des Datenpaares auf einem Datenspeicher der Anmeldeeinheit zur weiteren Datenverarbeitung erfolgt. Somit kann z.B. eine tabellarische Anzeige der Arbeitszeit erfasst werden.

Dem empfangenen Datensatz in Schritt d) kann vorteilhaft der geographische Ort der Anmeldeeinheit zum Zeitpunkt des Empfangs unter Erstellung eines Datenpaares zugeordnet werden. Dieses Datenpaar kann an eine weitere Anmeldeeinheit innerhalb eines Netzwerks von mehreren, vorzugsweise identischen, Anmeldeeinheiten übermittelt werden.

Bevorzugt kann zudem ein dauerhaftes Speichern des Datenpaares auf einem Datenspeicher der Anmeldeeinheit erfolgen. Dadurch kann z.B. die Aufenthaltszeit in einer Kantine erfasst und als Pausenzeit von der Arbeitszeit abgezogen werden. Das Datenpaar mit der geografischen Angabe kann um eine Zeitangabe ergänzt werden.

Das Scannen der Anmeldeeinheit nach der Anwesenheit von Bluetooth-Anhängern kann vorzugsweise kontinuierlich erfolgen. Der Scan kann allerdings getaktet erfolgen. Da die Reichweite von Bluetooth begrenzt ist, beispielsweise auf 500 qm Radius, kann eine Person mit Bluetooth-Anhängern lediglich beim Passieren erfasst werden oder sofern er sich in unmittelbarer Nähe zur Anmeldeeinheit befindet. Beim Passieren kann beispielsweise ein Arbeitszeitbeginn erfasst werden und eine Anwesenheit in einem bestimmten Sektor des Unternehmens. Ein nochmaliges Passieren erfasst das Arbeitszeitende. Passiert eine Person mit dem Bluetooth-Anhänger mehrere Anmeldeeinheiten, so kann eine Positionsübermittlung erfolgen, in welchem Sektor des Unternehmens sich die Person befindet. Diese Funktionalität kann vorteilhaft auch im Evakuierungsfall genutzt werden.

Der Bluetooth-Anhänger wiederum strahlt vorzugsweise eine Kennung, vorzugsweise umfassend eine Mac-Adresse aus, die er permanent und vorzugsweise zyklisch, besonders bevorzugt alle 0,5-5 Sekunden, über ein Bluetooth-Sendemodul bzw. eine Bluetooth-Sendeeinheit ausstrahlt. Bei dieser Form des Datenaustauschs kann ein "Pairing" entfallen, welches u.a. eine Empfangseinheit für den Bluetooth-Anhänger voraussetzt.

Vorteilhaft kann das als Evakuierungssystem ausgebildete Erfassungssystem daher mehrere Anmeldeeinheiten umfassen, welche als Netzwerk zum gegenseitigen Datenaustausch miteinander verbunden sind, derart dass nach dem Empfang des Signals die geographische Position der empfangenden Anmeldeeinheit und die Identität der jeweiligen Person an das Netzwerk, z.B. eine sogenannte cloud, übermittelt wird. Selbstverständlich kann auch der Zeitpunkt der Erfassung des Bluetooth-Signals an der jeweiligen Anmeldeeinheit erfasst und an das Netzwerk übertragen werden.

Der Betrieb eines Erkennungssystems zur automatischen Arbeitszeiterfassung, aber auch im Evakuierungsfall zur Positionsbestimmung einer Person in einem vorgegebenen Umfeld erfolgt nach einem erfindungsgemäßen Verfahren, wobei der Bluetooth-Anhänger vorzugsweise als ein BLE-Anhänger ausgebildet ist, so dass der Stromverbrauch zum Senden eines Signals vergleichsweise gering ist. Ein Empfangsmodul oder eine Empfangsfunktion muss der Bluetooth-Anhänger nicht zwingend aufweisen.

Weiterhin kann die Anmeldeeinheit zur geografischen Positionsbestimmung einen GPS-Sensor aufweisen. Ein solcher GPS-Sensor vorzugsweise eine Datensende- und Empfangseinheit für GPS-Daten aufweisen.

Die Erfindung hat zahlreiche weitere Vorteile und wird nachfolgend anhand mehrerer Ausführungsbeispiele mit Bezug auf die beigefügte Figur näher erläutert. Es zeigen:
Fig. 1 eine schematische Ansicht eines erfindungsgemäßen Evakuierungssystem; und
Fig. 2 ein schematisches Ablaufdiagramm der Nutzung von Anmeldeeinheiten als Evakuierungssystem bei Katastrophenalarm, z.B. Feueralarm oder Erdbebenalarm.

Bluetooth hat sich als Fachbegriff der elektronischen Kommunikationstechnik etabliert. Bluetooth bezeichnet gemeinhin einen Industriestandard für eine Datenübertragung zwischen Geräten auf kurze Distanz via Funktechnik. Bluetooth Geräte gehören zur Oberklasse der sogenannten Short Range Devices (Geräten mit kurzer Reichweite).

Im Bereich der Bluetooth-Technologie sind derzeit die Varianten Bluetooth 1, 2, 3, 4 und 5 bekannt. Besondere Unterklassen sind die Varianten Bluetooth Low Energie - BLE, als eine Variante mit geringem Energieverbrauch, und Smart Bluetooth bekannt. Eine Erklärung zur Unterscheidung der einzelnen Varianten finden sich in der Fachliteratur und u.a. auch auf Wikipedia-Datenbank.

In der vorliegenden Erfindung geht es um die Anwendung der vorgenannten Bluetooth-Datenübertragung im Rahmen eines erfindungsgemäßen Verfahrens und einer erfindungsgemäßen Anordnung.

Die Anordnung umfasst zumindest eine Log-In Anmeldeeinheit 3 und zumindest einen Bluetooth-Anhänger 1, vorzugsweise jedoch eine Vielzahl solcher Bluetooth-Anhänger.

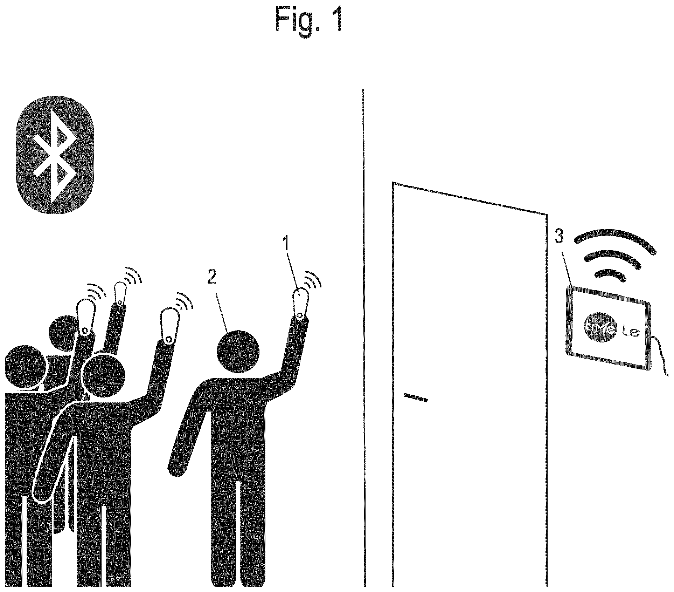

Fig. 1 zeigt eine Vielzahl von Bluetooth-Anhängern mit einem Raumbedarf in der bevorzugten Größe von weniger als 7 cm³, vorzugsweise weniger als 3 cm³ in Abgrenzung zu einem Handy und verfügt, wie bei Bluetooth-Geräten üblich, über ein Bluetooth-Funkmodul. Das Wort "Anhänger" bezieht sich vorwiegend auf die Größe des Bluetooth Geräts. Der Anhänger kann, muss jedoch nicht zwingend eine Öse oder eine Befestigungsvorrichtung aufweisen, sondern er kann durch eine gesonderte Haltevorrichtung gehalten werden. In einer erweiterten Variante eines Bluetooth-Anhängers im Rahmen der vorliegenden Erfindung kann dieser als eine Smartwatch ausgebildet sein. In weiterer Differenzierung zu einem Mobiltelefon weist der Bluetooth-Anhänger vorzugsweise keine Elektronikbausteine zum Aufbau einer Telefonverbindung auf. Besonders bevorzugt weist der Bluetooth-Anhänger lediglich ein Sende-jedoch kein Empfangsmodul auf, so dass er manipulier sicher ist.

Die Bluetooth-Anhänger können vorzugsweise dabei in einen Punkt-zu-Mehrpunkt-Netzwerk die Slave-Module bilden, welche mit der Log-In-Anmeldeeinheit als Mastermodul verbunden oder zumindest verbindbar sein können.

Im Rahmen des vorliegenden Verfahrens erfolgt zunächst das Bereitstellen eines Bluetooth-Anhängers 1 zu einem Nutzer 2. Der Bluetooth-Anhänger ist auf den Nutzer personalisiert. Er kann in einem ersten Betriebsmodus 100 genutzt werden, um die Anwesenheit einer Person am Arbeitsplatz zu protokollieren und ggf. eine Arbeitszeiterfassung zu gewährleisten.

Dies erfolgt vorzugsweise derart, dass der Bluetooth-Anhänger eine eindeutige Kennung, vorzugsweise umfassend eine Mac-Adresse aufweist, die er zyklisch, vorzugsweise alle 1-5 Sekunden über das Bluetooth-Funkmodul ausstrahlt. Die Mac-Adresse oder eine andere Form der Kennung ermöglicht eine Zuordnung des Bluetooth-Anhängers zu einer bestimmten Person. Der Bluetooth-Anhänger wird durch ein Computerprogramm, vorzugsweise durch die Log-In-Anmeldeeinheit der jeweiligen Person zugewiesen. Weiterhin kann ein Arbeitszeitmodell spezifisch für diese Person im Datenspeicher der Log-In-Anmeldeeinheit hinterlegt sein oder durch den Bluetooth-Anhänger an die besagte Log-In-Anmeldeeinheit übermittelt werden.

Zur Steuerung der Taktrate der Signalsendung bzw. der Kennung kann der Bluetooth-Anhänger zudem eine Steuer- und Auswerteeinheit aufweisen. Weiterhin weist der Bluetooth-Anhänger einen Datenspeicher auf, auf welchem die Kennung hinterlegt ist.

Die Steuerung des Bluetooth-Anhängers erfolgt vorzugsweise hinsichtlich der Dauer und der Abstände der Signale zum Verbindungsaufbau mit der Log-In-Anmeldeeinheit.

Die Signalübertragung erfolgt insbesondere durch eine LE-(Low-Energy) Variante der Bluetooth-Technologie.

Der Bluetooth-Anhänger kann als ein sogenannter BLE-Anhänger, auch BLE-Tag genannt, ausgebildet sein. BLE steht für Bluetooth low energy. Der geringe Energieverbrauch ermöglicht es den Bluetooth-Anhänger mit einer Batterie zu betreiben und insbesondere mit einer Knopfzelle, was eine weitergehende Miniaturisierung des Anhängers ermöglicht.

Sofern das Evakuierungssystem mehrere Log-In Anmeldeeinheiten umfasst, so ist zumindest eine dieser Anmeldeeinheiten transportabel, so dass diese im Feuerfall mitführbar ist.

Diese Log-In Anmeldeeinheit 3 ist als ein mobiles End-Gerät, wie z.B. ein Handy, ein Tablet, ein Laptop oder dergleichen ausgebildet. Das mobile End-Gerät ist im Brandfall mitführbar und kann auf einem Sammelplatz zur Ermittlung eines Evakuierungsstatus genutzt werden, also wieviel im Brandbereich befindlichen Personen bereits evakuiert sind.

Eine Log-In Anmeldeeinheit kann, insbesondere in einem LE-Betriebsmodus, bzw. Low-Energy Betriebsmodus, bezogen auf die Bluetooth-Datenübertragung, in der Umgebung nach bekannten Bluetooth-, insbesondere BLE-, Anhängern suchen. Die Umgebung beträgt dabei vorzugsweise zumindest 10 Meter, insbesondere zwischen 20-100 Meter.

Protokolliert werden insbesondere die aktuelle Zeit und Geoinformationen der von der Log-In-Anmeldeeinheit erkannten Bluetooth-Anhänger. Dies ermöglicht sowohl eine Positionserkennung eines jeweiligen Bluetooth Anhängers innerhalb oder außerhalb des Gebäudes, wodurch die Auffindbarkeit einer Person, die den Bluetooth-Anhänger trägt, erleichtert wird. Zugleich kann eine Arbeitszeiterfassung ermöglicht werden, z.B. ob der Mitarbeiter sich in einer Kantine befindet oder am Arbeitsplatz.

Die Informationen werden von der jeweiligen Log-In Anmeldeeinheit auf einem lokalen Datenspeicher gespeichert.

Die Log-In-Anmeldeeinheit kann vorteilhaft über ein GPS und/oder WLAN-Sende- und Empfangsmodul verfügen und kann vorzugsweise in größeren Abständen, z.B. nach zumindest 1 Stunde oder nach einem Arbeitstag oder noch länger, die ermittelten Zeit- und Positionsdaten an einen anderen Rechner z.B. via WLAN übermitteln. Besonders bevorzugt können durch die Log-In Anmeldeeinheit per WLAN oder Funknetz diese Daten an einen WEB-Server übermittelt werden, der dann mehrere End-Geräte bzw. Log-In-Anmeldeeinheiten synchronisieren kann. Die Anmeldeeinheiten können vorteilhaft untereinander kommunizieren, z.B. um ein Bewegungsschema zu erstellen.

Diese Funktion kann beispielsweise auch bei der Lohnbuchhaltung genutzt werden oder zur Sicherheitsüberprüfung bei der Arbeit in sensiblen Bereichen, so dass z.B. festgestellt werden kann, ob sich ein Nutzer z.B. gerade im Labor oder in seinem Büro befindet.

Eine Besonderheit des erfindungsgemäßen Verfahrens und der erfindungsgemäßen Vorrichtung ist, dass das Log-In-Modul ein dauerhaftes, vorzugsweise getaktetes, Signal zur Verbindungsherstellung mit weiteren Bluetooth-Anhängern sendet. Dieser Betriebsmodus der Verbindungsherstellung bzw. des Verbindungsaufbaus ist für das Log-In-Modul erfahrungsgemäß energieintensiv, sodass das Pairing bei den meisten Bluetooth Geräte nur bis zum Verbindungsaufbau mit einem Bluetooth-Slave erfolgt und danach für weitere Geräte aktiviert werden muss. Im Fall der vorliegenden Erfindung wird allerdings ein kontinuierlich, vorzugsweise ein kontinuierlich-getakteter, Verbindungsaufbau durchgeführt, um eine Ortung nach Bluetooth-Anhängern als Slaves durchzuführen.

Ergänzend zur herkömmlichen Bluetooth Technologie kann der Bluetooth-Slave zum Pairing ergänzend noch eine NFC-Übertragung einsetzen.

Bei der vorbeschriebenen Variante der Verbindung zwischen Bluetooth Anhänger und der Log-In-Anmeldeeinheit ist ein sogenanntes Bluetooth-Pairing nicht notwendig. Somit wird das erfindungsgemäße Verfahren und die einzelnen nachfolgend für das Evakuierungssystem beschriebenen Betriebsmodi ohne ein zeitaufwendiges Pairing zwischen Bluetooth-Anhänger und der jeweiligen Anmeldeeinheit durchgeführt.

Eine Verbindung kann vorzugsweise von einem beliebigen End-Gerät ausgehen, das sich dadurch zum Master über die antwortenden Slaves erhebt. Die Log-In Anmeldeeinheit kann beispielsweise ein Android Tablet mit Bluetooth-LE Technologie sein.

Die Log-In Anmeldeeinheit scannt, vorzugweise permanent, die Umgebung nach bekannten Bluetooth-Anhängern und/oder möglichen neuen Bluetooth-Anhängern. Dabei kann zusätzlich zur Uhrzeit und dem Standort (also welche Anmeldeeinheit bei einem Netzwerk aus mehreren Anmeldeeinheiten), sondern auch die Entfernung des Anhängers zur Anmeldeeinheit erfasst werden.

Durch die permanente Erkennung ist eine stabile externe Stromversorgung (Stromnetz, Powerbank und/oder Solaranbindung) zur Energieversorgung der Log-In-Anmeldeeinheit 3 von Vorteil. Ein Stromausfall über 3-4 Stunden kann jedoch auch über einen internen Akku bzw. eine interne Stromversorgung überbrückt werden.

Als Zusatzfunktion kann nach Feststellung der Identität der jeweiligen Person beim Passieren der Log-In-Anmeldeeinheit erfolgen. Pro zu erfassende Person sollte mind. ein Bluetooth Anhänger vorgesehen sein, die von der Person zur automatischen Zeiterfassung mitgeführt werden muss. Dieser Anhänger übermittelt in einem kurzen Zeitintervall, z.B. alle 3 Sekunden, eine eindeutige Identifizierung z.B. aktuell die MAC-Adresse und Herstellerinformationen.

Wie bereits beschrieben, können mehrere Log-In-Anmeldeeinheiten z.B. als mobile Erfassungs-Geräte, zu einem Netzwerk angeordnet werden. Dabei sind die Anmeldeeinheiten miteinander hinsichtlich ihres Datenaustauschs untereinander derart synchronisiert, dass die aktuelle Position einer erfassten Person innerhalb eines Unternehmens angezeigt werden kann.

Wenn sich die Log-In-Anmeldeeinheit bewegt können durch Sensoren zur Positionsbestimmung, z.B. GPS-Sensoren, auch die GEO-Daten im Zeitverlauf protokolliert und zur Visualisierung des Aufenthaltsortes der erkannten Personen verwendet werden.

Die eine oder mehrere Log-In Anmeldeeinheit können die Daten einer jeden erfassten Person über ein entsprechendes Computerprogramm grafisch aufarbeiten, auswerten und/oder weiterleiten, z.B. an eine Personalabteilung und/oder an die Geschäftsleitung.

Eine Besonderheit des erfindungsgemäßen Verfahrens und der erfindungsgemäßen Vorrichtung ist, dass das Log-In-Modul ein dauerhaftes, vorzugsweise getaktetes, Signal zur Verbindungsherstellung mit weiteren Bluetooth-Anhängern sendet. Dieser Betriebsmodus der Verbindungsherstellung bzw. des Verbindungsaufbaus ist für das Log-In-Modul erfahrungsgemäß energieintensiv, sodass das Pairing bei den meisten Bluetooth Geräte nur bis zum Verbindungsaufbau mit einem Bluetooth-Slave erfolgt und danach für weitere Geräte aktiviert werden muss. Im Fall der vorliegenden Erfindung wird allerdings ein kontinuierlich, vorzugsweise ein kontinuierlich-getakteter, Verbindungsaufbau durchgeführt, um eine Ortung nach Bluetooth-Anhängern als Slaves durchzuführen.

Ergänzend zur herkömmlichen Bluetooth Technologie kann der Bluetooth-Slave zum Pairing ergänzend noch eine NFC-Übertragung einsetzen.

Bei der vorbeschriebenen Variante der Verbindung zwischen Bluetooth Anhänger und der Log-In-Anmeldeeinheit ist ein sogenanntes Bluetooth-Pairing nicht notwendig.

Eine Verbindung kann vorzugsweise von einem beliebigen End-Gerät ausgehen, das sich dadurch zum Master über die antwortenden Slaves erhebt. Das Log-In Anmeldeeinheit kann beispielsweise ein Android Tablet mit Bluetooth-LE Technologie sein.

Die Log-In Anmeldeeinheit scannt, vorzugweise permanent, die Umgebung nach bekannten Bluetooth-Anhängern und/oder möglichen neuen Bluetooth-Anhängern. Dabei kann zusätzlich zur Uhrzeit und dem Standort (also welche Anmeldeeinheit bei einem Netzwerk aus mehreren Anmeldeeinheiten), sondern auch die Entfernung des Anhängers zur Anmeldeeinheit erfasst werden.

Durch die permanente Erkennung ist eine stabile externe Stromversorgung (Stromnetz, Powerbank und/oder Solaranbindung) zur Energieversorgung der Log-In-Anmeldeeinheit 3 von Vorteil. Ein Stromausfall über 3-4 Stunden kann jedoch auch über einen internen Akku bzw. eine interne Stromversorgung überbrückt werden.

Als Zusatzfunktion kann nach Feststellung der Identität der jeweiligen Person beim Passieren der Log-In-Anmeldeeinheit auch eine Überprüfung einer Zugangsberechtigung erfolgen. Hierfür kann die Log-In-Anmeldeeinheit mit einem Schließ- und/oder Alarmsystem kommunizieren.

Pro zu erfassende Person sollte mind. ein Bluetooth Anhänger vorgesehen sein, die von der Person zur automatischen Zeiterfassung mitgeführt werden muss. Dieser Anhänger übermittelt in einem kurzen Zeitintervall, z.B. alle 3 Sekunden, eine eindeutige Identifizierung z.B. aktuell die MAC-Adresse und Herstellerinformationen.

Wie bereits beschrieben, können mehrere Log-In-Anmeldeeinheiten z.B. als mobile Erfassungs-Geräte, zu einem Netzwerk angeordnet werden. Dabei sind die Anmeldeeinheiten miteinander hinsichtlich ihres Datenaustauschs untereinander derart synchronisiert, dass die aktuelle Position einer erfassten Person innerhalb eines Unternehmens angezeigt werden kann.

Das vorbeschriebene System kann zur Arbeitszeiterfassung und zur Sicherheitserfassung bezüglich bestimmter Berechtigungen zum Zutritt besonders gesicherter Bereiche genutzt werden. Gegenstand der vorliegenden Erfindung ist die Erweiterung des vorbeschriebenen Systems und dessen Funktionen als ein Evakuierungssystem.

Das Evakuierungssystem weist vorzugsweise drei Betriebsmodi auf, wobei jeder der Betriebsmodi einen besonderen Aspekt des Evakuierungssystems bilden kann.

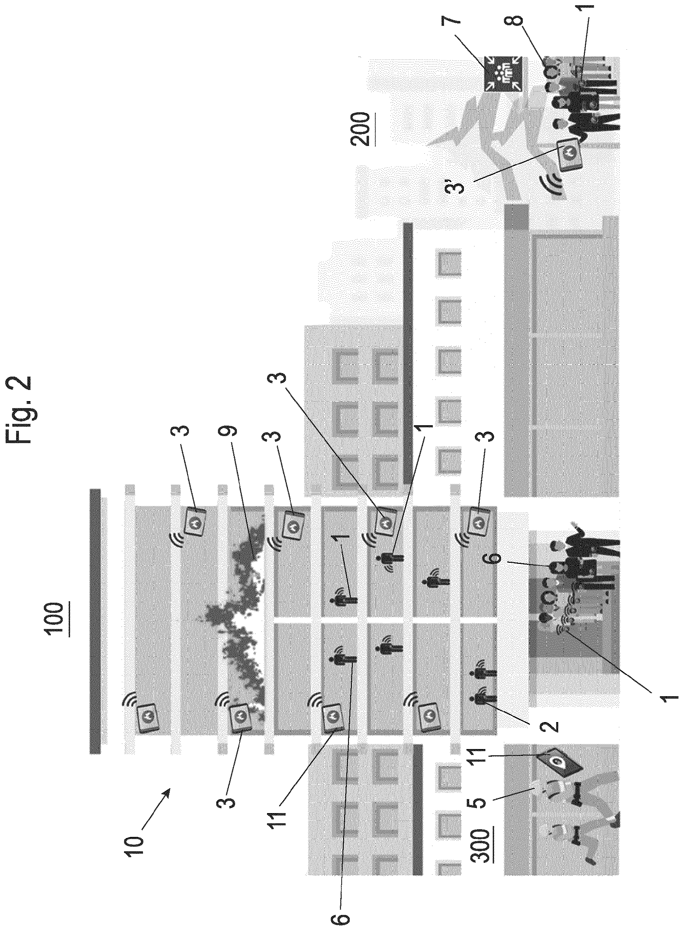

Fig. 2 zeigt beispielhaft einen Anwendungsfall mit mehreren als Tablett ausgebildeten Log-In Anmeldeeinheiten 3 in einem Unternehmen. Diese sind an strategischen Positionen, z.B. in Gängen oder dergleichen, in einem Gebäude, nachfolgend als Gefahrenbereich 10 bezeichnet, verteilt angeordnet.

Ein Evakuierungsfall, vorliegend als Katastrophenalarm, wie z.B. Feuer 9 oder Erdbeben, kann an einer der Log-In Anmeldeeinheiten 3 wahlweise manuell oder durch eine Kommandosignal eines Sensors, beispielsweise eines Brandschutzmelders, ausgelöst werden.

Nach dem Auslösen des Katastrophenalarms wird der Betriebsmodus 100 initiiert, welcher vorzugsweise ohne gesonderte Zugangsberechtigung nicht mehr deaktivierbar ist. Dabei wird ein akustisches Signal als Alarm von den Anmeldeeinheiten 3 abgegeben und die Anzeige der Anmeldeeinheit 3 zeigt, vorzugsweise ununterbrochen, eine Evakuierungsrichtung (z.B. ein Pfeil) an. Die Funktionalität entspricht der eines Leitsystems.

Während des Gefahrenfalls wird allerdings weiterhin die Anwesenheit jedes in der Nähe befindlichen Bluetooth-Anhängers 1 und damit der Person 2 mit dem Bluetooth-Anhänger erfasst und nach Identität, Ort und Zeit protokolliert.

Weiterhin tauschen die Anmeldeeinheiten 3 diese erfassten Daten untereinander aus, so dass diese an eine mobile Anmeldeeinheit übertragbar sind und übertragen werden. Fällt eine erste Anmeldeeinheit wegen übermäßiger Hitze aus, so liegen doch die Daten gesichert im Netzwerk vor und können durch eine zweite Anmeldeeinheit 3' abgefragt werden.

Fig. 2 stellt zudem einen zweiten Betriebsmodus 200 dar. In diesem Betriebsmodus befindet sich eine Anmeldeeinheit 3' außerhalb des Gefahrenbereichs 10 in einem Sammelbereich 7. Insbesondere bei dieser Anmeldeeinheit 3' kann es sich um eine transportable Anmeldeeinheit handeln.

Diese zählt und identifiziert die sich im Sammelbereich befindlichen Personen 8 und gleicht diese mit einem Sollwert ab. Der Sollwert bezieht sich auf die Gesamtzahl an Bluetooth-Anhänger 1, welche vor dem Brandfall im Gebäude waren, z.B. Mitarbeiter, Besucher, und welche während des Brandfalls das Gebäude betreten haben, z.B. Rettungskräfte 5. Selbstverständlich bezieht sich diese Gesamtzahl lediglich auf die Personen, welche mit einem entsprechenden Bluetooth-Anhänger ausgerüstet sind.

Die Bluetooth-Anhänger erlauben zudem die fehlenden Personen 6 zu identifizieren. Gibt es mehrere Sammelbereiche 7 und befinden sich in jedem Sammelbereich zumindest eine der Anmeldeeinheiten 3`, so können diese über eine Funkverbindung, z.B. über W-LAN, miteinander über das Netzwerk korrespondieren, so dass die Ermittlung der Personen an mehreren Sammelbereichen 7 erfolgt. Sofern sich eine Person 8 auf dem falschen Sammelbereich befindet, kann die unmittelbar durch das Evakuierungssystem erfasst und bei der Zählung berücksichtigt werden.

Die nicht-evakuierten Personen 6, welche sich noch im Gefahrenbereich befinden können durch die Daten der Bluetooth-Anhänger 1 identifiziert werden. Dies ermöglicht Rettungskräften 4 die Personen namentlich zu suchen, ein wichtiges Detail, da sich die zu rettenden Personen 6 oftmals in einem Schockzustand oder in einem benommenen Zustand befinden, in welchem sie nur auf direkte Anrede reagieren. Dies kann im Rettungsfall lebensentscheidend sein.

Fig. 2 zeigt darüber hinaus einen dritten Betriebsmodus 300 des Evakuierungssystems, welcher der Lokalisierung von zu rettenden Personen 6 im Gebäude bzw. im Gefahrenbereich 10 dient.

So kann aufgrund der zuletzt übermittelten Zeit und Positionsangaben der Person 6 ein ungefährer Aufenthaltsort 11 ermittelt werden, so dass Rettungskräfte gezielter suchen können. Selbst wenn die im Gefahrenbereich befindlichen Anmeldeeinheiten 3 nicht mehr funktionstauglich sind, so haben sie diese Daten bereits an das Netzwerk übermittelt, welche wiederum durch die Anmeldeeinheiten in den Sammelbereichen abrufbar sind. Dadurch kann die "letzte Position" der zu rettenden Person 6 ermittelt werden.

Einem Rettungseinsatzteam 5 können diese Daten zur Verfügung gestellt werden.

Die vorgenannten drei Betriebsmodi 100-300 können zeitgleich auf einem Anmeldesystem 3, 3' oder 4 ausgeführt werden und ermöglichen so eine Kombination aus Arbeitszeiterfassungssystem und Evakuierungssystem.

Die Betriebsmodi 100-300 können als eine Art "Override-Modi" betrieben werden und können insbesondere andere energie- oder leistungsverringernde Programme, welche auf der Anmeldeeinheit 3 vor oder während des Evakuierungsfalls initiiert wurden, außer Kraft setzen, um so eine maximale Datenkommunikation, eine maximale Datenverarbeitung und eine besonders schnelle Personenerfassung zu gewährleisten.

Wie zuvor erläutert, kann die Erfassung der evakuierten Personen 8 durch ein Anmeldeeinheit 3' außerhalb des Gefahrenbereichs 10 erfolgen. Alternativ oder zusätzlich kann auch die Erfassung der evakuierten Personen noch innerhalb des Gefahrenbereichs 10, z.B. an einem Ausgang des Gebäudes, durch eine Anmeldeeinheit 3 erfolgen, welche ihre Daten an ein externes elektronisches Gerät, z.B. dem Gerät 4 der Rettungskräfte 5, schickt. Dieses Gerät kann lediglich Daten visualisieren, ohne als Anmeldeeinheit zur Identifizierung einer Person mit Bluetooth-Anhänger via Bluetooth zu dienen. Es kann auch eine Nichtdetektion eines Bluetooth-Anhängers 1 durch die Anmeldeeinheiten 3 innerhalb des Gefahrenbereichs 10 zum Ergebnis führen, dass eine entsprechende Person zu einem bestimmten Zeitpunkt außerhalb des Gefahrenbereichs 10 und folglich evakuiert ist.

Aus Sicherheitsgründen kann auch eine redundante Ermittlung sowohl durch die Anmeldeeinheit oder Anmeldeeinheiten 3 innerhalb des Gefahrenbereichs 10 als auch durch die Anmeldeeinheit 3' außerhalb des Gefahrenbereichs, z.B. auf dem Sammelbereich 7, erfolgen.

Ein Datenprotokoll, z.B. über den Zeitpunkt und den Aufenthaltsort einer im Gefahrenbereich identifizierten Person, kann sowohl auf einer Speichereinheit der jeweiligen Anmeldeeinheit, welche den Bluetooth-Anhänger via Bluetooth erkannt hat, unmittelbar abgelegt werden. Zusätzlich oder alternativ kann das Datenprotokoll z.B. mit dem Ort der letzten zeitlichen Erkennung auch auf einer übergeordneten IT-Infrastruktur, einer sogenannten cloud, hinterlegt werden.

Das vorbeschriebene Netzwerk aus Anmeldeeinheiten kann auch lediglich ein BLE-Netzwerk sein oder gemeinsam mit der übergeordneten IT-Infrastruktur eine größere Reichweite abdecken.

Dabei aktualisiert die Anmeldeeinheit das auf der Speichereinheit hinterlegte Datenprotokoll auch bei Ausfall der Verbindung zur übergeordneten IT-Infrastruktur. So ist es möglich, dass das Datenprotokoll weitergeführt wird, auch wenn die Verbindung zur Cloud abgerissen ist. Eine nachträgliche Aktualisierung des Cloud-Datenprotokolls nach dem Wiederaufbau der Verbindung ist ebenfalls möglich.

Insbesondere ist es möglich, dass die Anmeldeeinheit im Evakuierungsfall Daten zur Position von Personen im Gefahrenbereich und/oder Informationen zum Gefahrenbereich oder die Person selbst und/oder Informationen zur Art eines Evakuierungsgrundes an Einsatzkräfte übermittelt oder einen Zugriff auf den oder die Datensätze der übergeordnete IT-Infrastruktur durch Einsatzkräfte bereitstellt. Dadurch können sich die Einsatzkräfte in der Einsatzvorbereitung, z.B. in der Auswahl der Rettungsutensilien oder auch bei der Durchführung des Einsatzes entsprechend an den Daten orientieren. Diese können durch ein mobiles Einsatzgerät 4 z.B. ein Tablet oder Mobiltelefon abgerufen werden.

Zumindest eine Anmeldeeinheit im Gefahrenbereich kann zudem ein Mikrofon und/oder eine Kamera aufweisen, welche im Evakuierungsfall eingeschaltet werden. Vorzugsweise können alle Anmeldeeinheiten entsprechend ausgerüstet und betrieben werden. Durch die visuelle Unterstützung können Informationen übermittelt werden, wo ein Hindernis vorliegt, welches das Durchkommen erschwert. Dies kann bei der Planung des kürzesten Rettungsweges berücksichtigt werden. Zudem können die zu Evakuierende bei schlechter Sicht eine Orientierung erhalten, wo die Anmeldeeinheit im Gefahrenbereich positioniert ist, z.B. um Kontakt nach außen herzustellen
Ein erfindungsgemäßes Evakuierungssystem umfasst einen oder mehrere Bluetooth-Anhänger, sowie ein Anmeldeeinheit, welche eingerichtet ist zur Ausführung des erfindungsgemäßen vorbeschriebenen Verfahrens.

Optimalerweise weist die Anmeldeeinheit einen integrierten Energiespeicher auf, welcher ausgelegt ist, zum Betrieb der Anmeldeeinheit über einen Zeitraum von zumindest 24 Stunden, sodass ein energieautarker Betrieb des Evakuierungssystem über einen hinreichend langen Zeitraum gewährleistet ist.

Folgende Ausführungsvarianten sind unabhängig von den vorbeschriebenen Ausführungsbeispielen besonders bevorzugt:
Der Bluetooth-Anhänger 1 kann vorzugsweise als ein BLE-Anhänger ausgebildet sein, wobei der Bluetooth-Anhänger 1 einen bevorzugten Raumbedarf von weniger als 7 cm³, besonders bevorzugt weniger als 3 cm³, aufweist.

Die Anmeldeeinheit 3 kann internetfähig sein und vorzugsweise eine W-LAN Sendeeinheit, besonders bevorzugt eine W-LAN Sende- und Empfangseinheit aufweisen, zum Austausch mit weiteren Anmeldeeinheiten 3', 3" oder mit externen Rechnern 4 als Teil einer übergeordneten IT-Infrastruktur.

### Bezugszeichen

- 1: Bluetooth Anhänger
- 2: Zu erfassende Person
- 3: Anmeldeeinheit
- 4: Externer Rechner / mobiles Einsatzgerät
- 5: Einsatz- bzw. Rettungskräfte
- 6: Zu evakuierende Person
- 7: Sammelplatz / außerhalb des Gefahrenbereichs
- 8: Evakuierte Person außerhalb des Gefahrenbereichs
- 9: Gefahr / Feuer
- 10: Gefahrenbereich
- 11: Gang

- 100: erster Betriebsmodus
- 200: zweiter Betriebsmodus
- 300: dritter Betriebsmodus

## Patentansprüche

1. Verfahren zum Betrieb eines Evakuierungssystems zur Unterstützung eines Evakuierungsfalls, insbesondere einer Evakuierung eines Gebäudes, **mit den folgenden Schritten:**
a. Bereitstellen eines Bluetooth-basierten Erkennungssystems umfassend zumindest eine Anmeldeeinheit (3 oder 3'), welche an der Arbeitsstelle positioniert wird und zumindest einen Bluetooth-Anhänger (1), welcher von der zu erfassenden Person (2, 6, 8) mitgeführt wird,
wobei der Bluetooth-Anhänger (1) einen Datensatz mit einer individuellen Kennung zur Identifizierung der Person (2) aufweist;
b. Initiierung eines Alarms aufgrund eines Evakuierungsfalls innerhalb eines Gefahrenbereichs (10);
c. Bereitstellen einer oder der Anmeldeeinheit (3', 3) an einem Ort (7) außerhalb des Gefahrenbereichs (10);
d. Scannen der Anmeldeeinheit (3', 3) nach zumindest einem, insbesondere einer Vielzahl, von auf die Anmeldeeinheit (3', 3) abgestimmten Bluetooth-Anhänger (1);
e. Senden eines Signals, insbesondere umfassend den Datensatz, durch den jeweiligen Bluetooth-Anhänger (1);
f. Empfang des Signals durch die Anmeldeeinheit (3', 3) bei gleichzeitiger Ermittlung des Zeitpunkts des Empfangs durch eine Zeiterfassung der Anmeldeeinheit (3', 3) und/oder der Position der Person (2, 8) unter Einbeziehung von geographischen Daten hinsichtlich des Orts der Anmeldeeinheit (3', 3), und
g. Vergleich der in Schritt d) ermittelten Daten mit einem Datenprotokoll umfassend einen vor dem Evakuierungsfall erstellten Datensatz umfassend einen letzten erfassten Zeitpunkt und einen letzten erfassten Ort der Person (2) im Gefahrenbereich (10) vor dem Initiieren des Evakuierungsfalls gemäß Schritt b; und
h. Aktualisierung des Datenprotokolls, wobei
das Evakuierungssystem mehrere Anmeldeeinheiten (3) umfasst, wobei zusätzlich zur bereitgestellten Anmeldeeinheit (3') in Schritt c weitere Anmeldeeinheiten (3) im Gefahrenbereich (10) verbleiben, wobei diese Anmeldeeinheiten (3) im Gefahrenbereich (10) die Schritte d-f unter Erstellung eines Datensatzes durchführen und diesen an das Netzwerk oder an eine übergeordnete IT-Infrastruktur zur Positionsbestimmung der Person im Gefahrenbereich (10) übermitteln, **dadurch gekennzeichnet,**
**dass** die Anmeldeeinheit (3') am Ort (7) außerhalb des Gefahrenbereichs (10) als mobiles Endgerät ausgebildet ist
und
**dass** die Anmeldeeinheiten (3) im Gefahrenbereich (10) ein Schnellwahlfeld zur Verbindung mit der Anmeldeeinheit (3) am Ort (7) außerhalb des Gefahrenbereichs (10) aufweisen.

2. Verfahren nach Anspruch 1, **dadurch gekennzeichnet, dass** das Scannen der Anmeldeeinheit oder Anmeldeeinheiten (3, 3') kontinuierlich erfolgt.

3. Verfahren nach einem der vorhergehenden Ansprüche, **dadurch gekennzeichnet, dass** kein Pairing zwischen der Anmeldeeinheit (3) oder Anmeldeeinheiten (3, 3') und den Bluetooth-Anhängern (1) erfolgt.

4. Verfahren nach einem der vorhergehenden Ansprüche, **dadurch gekennzeichnet, dass** das Evakuierungssystem mehrere Anmeldeeinheiten (3) umfasst, welche als Netzwerk zum gegenseitigen Datenaustausch, insbesondere via Bluetooth oder W-Lan, miteinander verbunden sind, derart dass nach den Empfang des Signals die geographische Position der empfangenden ersten Anmeldeeinheit (3) an einem ersten Ort (7) außerhalb des Gefahrenbereichs (10) an das Netzwerk übermittelt und von einem zweiten Anmeldeeinheit (3') an einem zweiten Ort außerhalb des Gefahrenbereichs (10) abgerufen wird.

5. Verfahren nach einem der vorhergehenden Ansprüche, **dadurch gekennzeichnet, dass** das Evakuierungssystem mehrere Anmeldeeinheiten (3) umfasst, wobei zusätzlich zur bereitgestellten Anmeldeeinheit (3') in Schritt c weitere Anmeldeeinheiten (3) im Gefahrenbereich (10) verbleiben, wobei die Anmeldeeinheiten (3) im Gefahrenbereich in einen Betriebsmodus (100) zur Anzeige des nahest-gelegenen Ausgangs aus dem Gefahrenbereich (10) als ein Leitsystem versetzt werden.

6. Verfahren nach einem der vorhergehenden Ansprüche, **dadurch gekennzeichnet, dass** das Evakuierungssystem als Erkennungssystem zur Arbeitszeiterfassung betreibbar ist.

7. Verfahren nach einem der vorhergehenden Ansprüche, **dadurch gekennzeichnet, dass** der Bluetooth-Anhänger (1) einen Datensatz mit einer individuellen Kennung zur Identifizierung der Person (2, 6, 8) aufweisen, vorzugsweise als eine Mac-Adresse, einen Namen der Person (2, 6, 8) und/oder einem Namenscode, wobei die Anmeldeeinheit (3, 3') vorzugsweise die ermittelten Namen der Personen (2, 6, 8), die sich im Gefahrenbereich (10) und/oder außerhalb des Gefahrenbereichs (10) befinden, anzeigt.

8. Verfahren nach einem der vorhergehenden Ansprüche, **dadurch gekennzeichnet, dass** das Datenprotokoll sowohl auf einer Speichereinheit der Anmeldeeinheit (3, 3') als auch auf einer übergeordneten IT-Infrastruktur, einer sogenannten cloud, hinterlegt ist, wobei die Anmeldeeinheit (3, 3') das auf der Speichereinheit hinterlegte Datenprotokoll auch bei Ausfall der Verbindung zur übergeordneten IT-Infrastruktur aktualisiert.

9. Verfahren nach einem der vorhergehenden Ansprüche, **dadurch gekennzeichnet, dass** die Anmeldeeinheit (3, 3') im Evakuierungsfall Daten zur Position von Personen (2, 6, 8) im Gefahrenbereich (10) und/oder Informationen zum Gefahrenbereich (10) oder zur Person (2, 6, 8) selbst und/oder Informationen zur Art eines Evakuierungsgrundes an Einsatzkräfte (5) übermittelt oder einen Zugriff auf den oder die Datensätze oder das Datenprotokoll der übergeordnete IT-Infrastruktur durch Einsatzkräfte (5) bereitstellt.

10. Verfahren nach einem der vorhergehenden Ansprüche, **dadurch gekennzeichnet, dass** die Anmeldeeinheit (3) im Gefahrenbereich (10) ein Mikrofon und/oder eine Kamera aufweist, welche im Evakuierungsfall eingeschaltet werden.

11. Evakuierungssystem umfassend einen oder mehrere Bluetooth-Anhänger (1), sowie mehrere Anmeldeeinheiten (3, 3'), welche eingerichtet sind zur Ausführung eines Verfahrens nach einem der vorhergehenden Ansprüche wobei die Anmeldeeinheit (3, 3') vorzugsweise einen integrierten Energiespeicher aufweist, welcher ausgelegt ist, zum Betrieb der Anmeldeeinheit (3, 3') über einen Zeitraum von zumindest 24 Stunden, wobei das Evakuierungssystem **dadurch gekennzeichnet ist, dass** die Anmeldeeinheit (3') am Ort (7) außerhalb des Gefahrenbereichs (10) als mobiles Endgerät ausgebildet ist und dass die Anmeldeeinheiten (3) im Gefahrenbereich (10) ein Schnellwahlfeld zur Verbindung mit der Anmeldeeinheit (3) am Ort (7) außerhalb des Gefahrenbereichs (10) aufweisen.

## Claims

1. Method for operating an evacuation system for supporting an evacuation event, in particular an evacuation of a building, **comprising the following steps of:**
a. providing a Bluetooth-based recognition system comprising at least one registration unit (3 or 3'), which is positioned at the workplace, and at least one Bluetooth tag (1), which is carried by the person (2, 6, 8) to be recognized,
wherein the Bluetooth tag (1) has a data set with an individual identifier for identifying the person (2);
b. initiating an alarm due to an evacuation event within a danger zone (10);
c. providing one or the registration unit (3', 3) at a location (7) outside the danger zone (10);
d. scanning the registration unit (3', 3) for at least one Bluetooth tag(1), in particular a plurality thereof, which is matched to the registration unit (3', 3);
e. transmitting a signal, in particular comprising the data set, by the respective Bluetooth tag (1);
f. receiving the signal by the registration unit (3', 3) with simultaneous determination of the time of reception by a time recording of the registration unit (3', 3) and/or the position of the person (2, 8) with the inclusion of geographical data with regard to the location of the registration unit (3', 3), and
g. comparing the data determined in step d) with a data log comprising a data set created prior to the evacuation event comprising a last detected time and a last detected location of the person (2) in the danger zone (10) prior to the initiation of the evacuation event according to step b; and
h. updating the data log, wherein
the evacuation system comprises a plurality of registration units (3),
wherein further registration units (3) remain in the danger zone (10) in addition to the registration unit (3') provided in step c, wherein these registration units (3) carry out steps d-f in the danger zone (10) by creating a data record and transmitting this to the network or to a higher-level IT infrastructure for determining the position of the person in the danger zone (10), **characterized**
**in that** the registration unit (3') at the location (7) outside the danger zone (10) is designed as a mobile terminal
and
**in that** the registration units (3) in the danger zone (10) have a quick dial field for connection to the registration unit (3) at the location (7) outside the danger zone (10).

2. Method according to claim 1, **characterized in that** the scanning of the registration unit or registration units (3, 3') is carried out continuously.

3. Method according to one of the preceding claims, **characterized in that** no pairing takes place between the registration unit (3) or registration units (3, 3') and the Bluetooth tags (1).

4. Method according to one of the preceding claims, **characterized in that** the evacuation system comprises a plurality of registration units (3) which are connected to one another as a network for mutual data exchange, in particular via Bluetooth or W-Lan, in such a way that, after the signal has been received, the geographical position of the receiving first registration unit (3) at a first location (7) outside the danger zone (10) is transmitted to the network and retrieved by a second registration unit (3') at a second location outside the danger zone (10).

5. Method according to one of the preceding claims, **characterized in that** the evacuation system comprises a plurality of registration units (3), wherein in addition to the provided registration unit (3') in step c, further registration units (3) remain in the danger zone (10), wherein the registration units (3) in the danger zone are set to an operating mode (100) for indicating the closest exit from the danger zone (10) as a guidance system.

6. Method according to one of the preceding claims, **characterized in that** the evacuation system can be operated as a detection system for recording working time.

7. Method according to one of the preceding claims, **characterized in that** the Bluetooth tag (1) has a data set with an individual identifier for identifying the person (2, 6, 8), preferably as a Mac address, a name of the person (2, 6, 8) and/or a name code, wherein the registration unit (3, 3') preferably displays the determined names of the persons (2, 6, 8) who are in the danger zone (10) and/or outside the danger zone (10).

8. Method according to one of the preceding claims, **characterized in that** the data log is stored both on a storage unit of the registration unit (3, 3') and on a higher-level IT infrastructure, a so-called cloud, wherein the registration unit (3, 3') updates the data log stored on the storage unit even if the connection to the higher-level IT infrastructure fails.

9. Method according to one of the preceding claims, **characterized in that** the registration unit (3, 3') transmits data on the position of persons (2, 6, 8) in the danger zone (10) and/or information on the danger zone (10) or on the person (2, 6, 8) itself and/or information on the type of evacuation reason to emergency services (5) in the evacuation event or provides access to the data record(s) or the data log of the higher-level IT infrastructure by emergency services (5).

10. Method according to one of the preceding claims, **characterized in that** the registration unit (3) has a microphone and/or a camera in the danger zone (10), which are switched on in the evacuation event.

11. Evacuation system comprising one or more Bluetooth tags (1), as well as a plurality of registration units (3, 3'), which are set up to carry out a method according to one of the preceding claims, wherein the registration unit (3, 3') preferably has an integrated energy storage device, which is designed to operate the registration unit (3, 3') over a period of at least 24 hours, wherein the evacuation system is **characterized in that** the registration unit (3') at the location (7) outside the danger zone (10) is designed as a mobile terminal and **in that** the registration units (3) in the danger zone (10) have a quick-dial field for connection to the registration unit (3) at the location (7) outside the danger zone (10).

## Revendications

1. Procédé pour l'utilisation d'un système d'évacuation destiné en soutien à une opération d'évacuation, en particulier une évacuation d'un bâtiment, comprenant les étapes suivantes :
a. fourniture d'un système de reconnaissance basé sur Bluetooth comprenant au moins une unité d'annonce (3 ou 3') qui est positionnée à un poste de travail et au moins un pendant Bluetooth (1) que la personne à détecter (2, 6, 8) garde sur elle,
le pendant Bluetooth (1) contenant un ensemble de données avec un identifiant individuel pour identifier la personne (2) ;
b. déclenchement d'une alarme en raison d'une opération d'évacuation dans une zone dangereuse (10) ;
c. fourniture d'une unité ou de l'unité d'annonce (3', 3) à un endroit (7) en dehors de la zone dangereuse (10) ;
d. balayage par l'unité d'annonce (3', 3) pour rechercher au moins un, en particulier plusieurs pendants Bluetooth (1) syntonisés sur l'unité d'annonce (3', 3) ;
e. émission d'un signal, contenant en particulier l'ensemble de données, par le pendant Bluetooth (1) en question ;
f. réception du signal par l'unité d'annonce (3', 3) en même temps que la détermination du moment de la réception par un comptage du temps par l'unité d'annonce (3', 3) et/ou de la position de la personne (2, 8) en tenant compte de données géographiques concernant la localisation de l'unité d'annonce (3', 3), et
g. comparaison des données déterminées dans l'étape d) avec un protocole de données comprenant un ensemble de données créé avant l'opération d'évacuation et contenant un dernier moment relevé et une dernière localisation relevée de la personne (2) dans la zone dangereuse (10) avant le déclenchement de l'opération d'évacuation selon l'étape b) ; et
h. actualisation du protocole de données,
dans lequel le système d'évacuation comprend plusieurs unités d'annonce (3), d'autres unités d'annonce (3) restent dans la zone dangereuse (10) en plus de l'unité d'annonce (3') fournie dans l'étape c), ces unités d'annonce (3) dans la zone dangereuse (10) exécutent les étapes d) à f) en créant un ensemble de données et transmettent celui-ci au réseau ou à une infrastructure informatique de rang supérieur pour déterminer la position de la personne dans la zone dangereuse (10),
**caractérisé en ce que** l'unité d'annonce (3') de l'endroit (7) situé en dehors de la zone dangereuse (10) est conformée comme un terminal mobile et
**en ce que** les unités d'annonce (3) dans la zone dangereuse (10) comportent un tableau de numérotation rapide pour la communication avec l'unité d'annonce (3) de l'endroit (7) situé en dehors de la zone dangereuse (10).

2. Procédé selon la revendication 1, **caractérisé en ce que** le balayage par l'unité d'annonce ou les unités d'annonce (3, 3') est effectué en continu.

3. Procédé selon l'une des revendications précédentes, **caractérisé en ce qu'**il n'y a pas d'appariement entre l'unité d'annonce (3) ou les unités d'annonce (3, 3') et les pendants Bluetooth (1).

4. Procédé selon l'une des revendications précédentes, **caractérisé en ce que** le système d'évacuation comprend plusieurs unités d'annonce (3) qui sont connectées en réseau pour l'échange réciproque de données, en particulier par Bluetooth ou réseau local sans fil, de telle manière que, après la réception du signal, la position géographique de la première unité d'annonce (3) réceptrice à un premier endroit (7) situé en dehors de la zone dangereuse (10) soit transmise au réseau et appelée par une deuxième unité d'annonce (3') à un deuxième endroit situé en dehors de la zone dangereuse (10).

5. Procédé selon l'une des revendications précédentes, **caractérisé en ce que** le système d'évacuation comprend plusieurs unités d'annonce (3), d'autres unités d'annonce (3) restant dans la zone dangereuse (10) en plus de l'unité d'annonce (3') fournie dans l'étape c), les unités d'annonce (3) dans la zone dangereuse passant dans un mode de fonctionnement (100) qui indique la sortie la plus proche de la zone dangereuse (10) sous la forme d'un système de guidage.

6. Procédé selon l'une des revendications précédentes, **caractérisé en ce que** le système d'évacuation peut être utilisé comme un système de reconnaissance pour la mesure du temps de travail.

7. Procédé selon l'une des revendications précédentes, **caractérisé en ce que** les pendants Bluetooth (1) contiennent un ensemble de données avec un identifiant individuel pour l'identification de la personne (2, 6, 8), de préférence une adresse MAC, un nom de la personne (2, 6, 8) et/ou un code de nom, l'unité d'annonce (3, 3') affichant de préférence les noms déterminés des personnes (2, 6, 8) qui se trouvent dans la zone dangereuse (10) et/ou en dehors de la zone dangereuse (10).

8. Procédé selon l'une des revendications précédentes, **caractérisé en ce que** le protocole de données est stocké aussi bien dans une unité de mémoire de l'unité d'annonce (3, 3') que dans une infrastructure informatique de niveau supérieur, appelée *cloud,* l'unité d'annonce (3, 3') actualisant le protocole de données stocké dans l'unité de mémoire même en cas de défaillance de la connexion avec l'infrastructure informatique de rang supérieur.

9. Procédé selon l'une des revendications précédentes, **caractérisé en ce que**, en cas d'évacuation, l'unité d'annonce (3, 3') transmet aux services d'intervention (5) des données sur la position de personnes (2, 6, 8) dans la zone dangereuse (10) et/ou des informations sur la zone dangereuse (10) ou sur la personne (2, 6, 8) elle-même et/ou des informations sur la nature de la raison d'évacuer ou donne accès aux services d'intervention (5) à l'ensemble de données ou aux ensembles de données ou au protocole de données de l'infrastructure informatique de rang supérieur.

10. Procédé selon l'une des revendications précédentes, **caractérisé en ce que** l'unité d'annonce (3) dans la zone dangereuse (10) comporte un microphone et/ou une caméra, qui sont activés en cas d'évacuation.

11. Système d'évacuation comprenant un ou plusieurs pendants Bluetooth (1), ainsi que plusieurs unités d'annonce (3, 3') qui sont configurées pour exécuter un procédé selon l'une des revendications précédentes, dans lequel l'unité d'annonce (3, 3') comporte de préférence un accumulateur d'énergie intégré pour faire fonctionner l'unité d'annonce (3, 3') pendant au moins 24 heures, **caractérisé en ce que** l'unité d'annonce (3') de l'endroit (7) situé en dehors de la zone dangereuse (10) est conformée comme un terminal mobile et **en ce que** les unités d'annonce (3) dans la zone dangereuse (10) comportent un tableau de numérotation rapide pour la communication avec l'unité d'annonce (3) de l'endroit (7) situé en dehors de la zone dangereuse (10).
